# EUROPÄISCHE PATENTSCHRIFT

(11) **EP 2 126 339 B1**
(45) Veröffentlichungstag und Bekanntmachung des Hinweises auf die Patenterteilung: **01.09.2010**
(21) Anmeldenummer: 08715961.2
(22) Anmeldetag: 22.02.2008
(51) Int. Cl.: F02N 11/08

(54) **STEUERUNGSEINHEIT ZUR STEUERUNG EINES AUTOMATISCHEN ABSCHALTVORGANGS UND/ODER EINSCHALTVORGANGS EINES FAHRZEUGTRIEBWERKS**
CONTROL UNIT FOR CONTROLLING AN AUTOMATIC SHUTDOWN AND/OR START-UP OF A VEHICLE MOTOR
UNITÉ DE COMMANDE POUR LA COMMANDE D'UN PROCESSUS AUTOMATIQUE DE DÉBRAYAGE ET/OU D'EMBRAYAGE D'UNE TRANSMISSION DE VÉHICULE

(30) Priorität: 28.02.2007 DE 102007009836
(43) Veröffentlichungstag der Anmeldung: 02.12.2009
(73) Patentinhaber: Bayerische Motoren Werke Aktiengesellschaft, 80809 München (DE)
(72) Erfinder: DIETZ, Volker c/o Pauli-Möst, 91315 Höchstadt (DE)
(86) Internationale Anmeldenummer: PCT/EP2008/001410
(87) Internationale Veröffentlichungsnummer: WO 2008/104330

(56) Entgegenhaltungen:
- DE-A1- 10 307 462
- DE-A1-102004 044 473
- DE-C1- 4 412 438
- DE-C1- 10 211 461

## Beschreibung

Die Erfindung bezieht sich auf eine Steuerungseinheit zur Steuerung eines automatischen Abschaltvorgangs einer Brennkraftmaschine oder eines anderen Fahrzeugtriebwerks in einem Kraftfahrzeug nach dem Oberbegriff des Anspruchs 1, und auf eine Steuerungseinheit zur Steuerung eines automatischen Einschaltvorgangs einer Brennkraftmaschine oder eines andersartigen Fahrzeugtriebwerks in einem Kraftfahrzeug nach dem Oberbegriff des Anspruchs 9.

Um Kraftstoffverbrauch und Schadstoffemissionen zu reduzieren, werden derzeit Verfahren und Systeme entwickelt und zum Teil auch bereits eingesetzt, welche den Elektromotor oder den Hybridmotor oder die Brennkraftmaschine, also das Triebwerk eines Kraftfahrzeugs unter bestimmten Voraussetzungen bzw. bei Vorliegen definierter, jedoch unter Umständen entwicklungsseitig durch Daten- oder Programmstand der Steuerungseinheit frei applizierbarer Abschaltbedingungen automatisch abschalten und bei Vorliegen definierter, jedoch unter Umständen entwicklungsseitig durch Daten- oder Programmstand der Steuerungseinheit frei applizierbarer, Einschaltbedingungen automatisch wieder einschalten. Derartige Verfahren und Systeme sind vor allem für den Stadtverkehr zur Reduzierung des Kraftstoffverbrauchs und gleichermaßen auch zur Reduzierung von Emissionen, vor allem auch zur Reduzierung von CO₂-Emissionen geeignet, da im Stadtverkehr das Fahrzeug oft an Ampeln oder aufgrund des Verkehrs zum Stehen kommt und der Betrieb der Brennkraftmaschine nicht erforderlich ist.

Eine Möglichkeit der Ausprägung solcher genannten Verfahren und Systeme ist die aus der DE 101 61 343 A1 bekannte automatische Abschalt- und Einschaltsteuervorrichtung für einen Verbrennungsmotor. Dabei nimmt die Steuervorrichtung entsprechende Maßnahmen zum Abschalten des Verbrennungsmotors vor, wenn alle genannten Abschaltbedingungen erfüllt sind. Sind vorgegebene Anschaltbedingungen erfüllt, nimmt die Steuervorrichtung entsprechende Maßnahmen zum automatischen Einschalten des Verbrennungsmotors vor.

Prinzipiell können die vorgegebenen, jedoch unter Umständen entwicklungsseitig durch Daten- oder Programmstand der Steuerungseinheit frei applizierbaren Abschaltbedingungen oder Einschaltbedingungen zum automatischen Ab- oder Einschalten der Antriebseinheit in Abschaltaufforderungsbedingungen und in Abschaltverhinderungsbedingungen sowie Einschaltaufforderungsbedingungen und Einschaltverhinderungsbedingungen aufgeteilt werden, wobei die Abschaltaufforderungsbedingungen derartige Abschaltbedingungen sind, die erfüllt sein müssen, um - initiiert durch die softwareinterne Betriebsstrategie der Steuerungseinheit - einen automatischen Abschaltvorgang einleiten zu können. Im Gegensatz dazu sind die Abschaltverhinderungsbedingungen derartige Abschaltbedingungen, die nicht erfüllt sein dürfen, um einen - initiiert durch die softwareinterne Betriebsstrategie der Steuerungseinheit - automatischen Abschaltvorgang einleiten zu können. Eine Abschaltverhinderungsbedingung wäre bspw. dann erfüllt, wenn der Ladezustand der Batterie unter einem vorgegebenen Grenzwert liegt. Entsprechend den Abschaltbedingungen können auch die Einschaltbedingungen in Einschaltaufforderungsbedingungen und Einschaltverhinderungsbedingungen aufgeteilt sein.

So offenbart die DE 100 30 290 A1 ebenfalls ein Verfahren und ein System zum automatischen Abschalten und Einschalten eines Fahrzeugtriebwerks. Hierbei wird ein automatisches Abschalten verhindert, wenn zwar alle fahrerseitigen Bedingungen erfüllt sind, aber der Ladezustand der Batterie des Fahrzeugs unterhalb einer vorgegebenen Sperrschwelle liegt. Diese Bedingung stellt eine Abschaltverhinderungsbedingung dar, die vom Fahrer nicht beeinflussbar ist. Die als Verbrennungsmotor ausgestaltete Antriebseinheit bzw. wird automatisch wieder eingeschaltet, wenn während des Stillstands des automatisch abgeschalteten Verbrennungsmotors der Ladezustand der Batterie unter die vorgegebene Sperrschwelle fällt, oder wenn vorgegebene Maßnahmen zum automatischen Anschalten des Verbrennungsmotors vom Fahrer eingeleitet wurden.

Die DE 44 12 438 C offenbart eine Steuerungseinheit zur Steuerung eines automatischen Abschaltvorgangs eines Fahrzeugtriebwerks in einem Kraftfahrzeug, wobei die Steuerungseinheit ein Abschaltsignal zum Vornehmen entsprechender Abschaltmaßnahmen zum automatischen Abschalten des Fahrzeugtriebwerks aussendet, wenn vorgegebene Abschaltaufforderungsbedingungen erfüllt sind und keine vorgegebene Abschaltverhinderungsbedingung erfüllt ist.

Wird eine Antriebseinheit bzw. ein Fahrzeugtriebwerk, welches auf Basis verbrennungsphysikalischer oder rein elektrischer Kraftumwandlung, oder einer Mischform beider Kraftumwandlungsverfahren (Hybridsystem) basiert, trotz Vorliegen aller Abschaltaufforderungsbedingungen bzw. Einschaltaufforderungsbedingungen nicht automatisch ab- oder eingeschaltet, so kann dies beim Kunden ggf. zu Beeinträchtigung der Akzeptanz derartiger Systeme oder zu Kundenreklamationen führen, vor allem dann, wenn er nicht nachvollziehen kann, warum das Fahrzeugtriebwerk nicht automatisch ab-oder eingeschaltet wurde. Würde er daraufhin eine Werkstatt aufsuchen, kann das Personal dort in der Regel ebenfalls nicht nachvollziehen, warum kein automatischer Abschalt- und/oder Einschaltvorgang vorgenommen wurde.

Aufgabe der Erfindung ist es somit, derartige Kundenreklamationen zumindest für das Werkstättenpersonal nachvollziehbarer zu gestalten.

Diese Aufgabe wird durch eine Steuerungseinheit nach Patentanspruch 1 und nach Patentanspruch 9 gelöst. Vorteilhafte Weiterbildungen ergeben sich aus den abhängigen Ansprüchen.

Verfahren und Steuerungseinheiten zum automatischen Abschalten oder Einschalten einer Antriebseinheit bzw. eines Fahrzeugtriebwerks können in verschiedenen Fahrzeugfunktionen verwendet werden. So wird bspw. im Rahmen einer sog. "Automatischen Start Stopp Funktion" das Fahrzeugtriebwerk in Abhängigkeit von vorgegebenen Bedingungen und bei bestimmten Verkehrssituationen, z. B. an Ampeln oder im sog. Stop-and-Go-Verkehr, ab- und auch wieder eingeschaltet. Ebenso wird bei Fahrzeugen, die mit einer hybriden Antriebseinheit bestehend aus einer Brennkraftmaschine (d.h. einem Verbrennungsmotor mit Verbrennungen, die nach einem Otto-, Diesel-oder ähnlich gearteten thermodynamischen Prozessen ablaufen) und einem Elektromotor ausgestattet sind, diese Brennkraftmaschine teilweise abgeschaltet und wieder eingeschaltet um Kraftstoff zu sparen und Emissionen zu reduzieren.

Grundgedanke der Erfindung ist, eine Speichereinheit vorzusehen, in der Informationen gespeichert werden, die Aufschluss darüber geben, warum die Brennkraftmaschine nicht automatisch abgeschaltet oder eingeschaltet wurde obwohl alle-vorgegebenen Abschaltaufforderungsbedingungen bzw. Einschaltaufforderungsbedingungen erfüllt sind. Im Hinblick auf die Steuerung eines automatischen Abschaltvorgangs eines Fahrzeugtriebwerks gemäß obiger Definition in einem Kraftfahrzeugs, insbesondere einer Brennkraftmaschine, zeichnet sich die erfindungsgemäße Steuerungseinheit dadurch aus, dass die Steuerungseinheit ein Speichersignal zum Speichern zumindest eines einer Abschaltverhinderungsbedingung zugeordneten Speichereintrags an eine Speichereinheit sendet, wenn vorgegebene Bedingungen erfüllt sind. Die Speichereinheit kann Teil einer ohnehin vorhandenen Speichereinheit sein, die mit entsprechenden Auslesegeräten in Werkstätten und in der Produktion von Fahrzeugwerken ausgelesen werden kann.

Die Steuerungseinrichtung kann bei verschiedenen Bedingungen verschiedene Speichersignale aussenden, wodurch wiederum verschiedene Speichereinträge vorgenommen werden können.

Die Steuerungseinrichtung kann ein als Aktivsignal ausgestaltetes Speichersignal an die Speichereinheit senden, wenn zusätzlich zu allen Abschaltaufforderungsbedingungen auch zumindest eine Abschaltverhinderungsbedingung erfüllt ist und das Fahrzeugtriebwerk, insbesondere die Brennkraftmaschine deshalb nicht automatisch abgeschaltet wird. Alternativ zum Aktivsignal können auch charakteristische Randzeitpunkte des Auftretens und Abfallens des Aktivsignals (beispielsweise die Signalflanken) der zu speichernden Information gesendet werden. Dabei sendet die Steuerungseinheit beispielsweise ein genau dieser Abschaltverhinderungsbedingung zugeordnetes, und von Aktivsignalen anderer Abschaltverhinderungsbedingungen unterscheidbares Aktivsignal für die Dauer, in der diese Abschaltverhinderungsbedingung erfüllt ist. Wie bereits eingangs erwähnt, wird dieses Speichersignal nur ausgesendet, wenn prinzipiell ein Abschaltvorgang eingeleitet werden könnte, da alle Abschaltaufforderungsbedingungen erfüllt sind, dies jedoch nicht möglich ist, da gleichzeitig eine Abschaltverhinderungsbedingung erfüllt ist. Das Aktivsignal wird wieder zurückgenommen wenn entweder nicht mehr alle Abschaltaufforderungsbedingungen vorliegen oder wenn die entsprechende Abschaltverhinderungsbedingung nicht mehr vorliegt. Über die Art und Weise und über die Zeitpunkte, zu welchen eine Bedingung gesetzt oder zurückgenommen werden kann, entscheidet eine in der Steuerungseinheit vorhandene Logik. Alternativ kann das Aktivsignal auch erst zu dem Zeitpunkt zurückgenommen werden, wenn unabhängig von den Abschaltaufforderungsbedingungen die entsprechende Abschaltverhinderungsbedingung nicht mehr vorliegt.

In Abhängigkeit von dem ankommenden Speichersignal wird in der Speichereinheit ein entsprechender Speichereintrag vorgenommen. Um nachvollziehen zu können, warum ein automatischer Abschaltvorgang nicht vorgenommen worden ist, kann gespeichert werden, welche Abschaltverhinderungsbedingung erfüllt ist bzw. war. Vorteilhafterweise kann zusätzlich gespeichert werden, wann diese Abschaltverhinderungsbedingung erfüllt war und wann sie ihren Zustand wieder von "erfüllt" bzw. "gesetzt" auf "nicht erfüllt" bzw. "zurückgenommen" gewechselt hat.

In einer vorteilhaften Ausgestaltung der Erfindung nimmt die Speichereinheit auf ein Aktivsignal zumindest einen der folgenden Speichereinträge vor:
a) einen den Zustand der Abschaltverhinderungsbedingung wiedergebenden ersten Speichereintrag, also einen sog. Statuseintrag und/oder
b) einen zum Zeitpunkt des Aussendens des Aktivsignals aktuellen ersten Kilometerstand des Kraftfahrzeugs, also einen sog. Start-Kilometereintrag und/oder
c) einen zum Zeitpunkt des Beendens des Aktivsignals aktuellen zweiten Kilometerstand des Kraftfahrzeugs, also einen sog. Ende-Kilometereintrag.

Alternativ zu den Kilometereinträgen in b) und c) ist es ebenso möglich, dass die jeweiligen Zeitpunkte der Einträge (relativ zum aktuellen Zeitpunkt oder absolut seit definiertem Zählbeginn der Zeiten) gespeichert werden.

Der sog. Statuseintrag gibt eine Information darüber, ob die entsprechende Abschaltverhinderungsbedingung zu diesem Zeitpunkt aktuell erfüllt ist oder nicht. Der sog. Start-Kilometereintrag bzw. erste Kilometerstand (bzw. der Startzeitpunkt) gibt an, bei welchem Kilometerstand diese Abschaltverhinderungsbedingung letztmalig erfüllt war, und der Ende-Kilometereintrag bzw. zweite Kilometerstand (bzw. der Endzeitpunkt) gibt an, bei welchem Kilometerstand diese Abschaltverhinderungsbedingung letztmalig ihren Zustand von "erfüllt" bzw. "gesetzt" auf "nicht erfüllt" bzw. "zurückgenommen" gewechselt habt. Der Statuseintrag, der Start-Kilometereintrag und der Ende-Kilometereintrag werden immer wieder überschrieben, sobald ein neuer Eintrag vorgenommen wird. Durch das Überschreiben des Start-Kilometereintrag und des Ende-Kilometereintrag kann Speicherplatz gespart werden.

Zusätzlich zu den oben genannten Speichereinträgen kann noch ein weiterer Speichereintrag, ein sog. Zählspeichereintrag vorgenommen werden, dessen Wert der Anzahl entspricht, wie oft diese Abschaltverhinderungsbedingung seit der gesamten Laufzeit des Fahrzeugs oder seit dem letzten Reset dieses Wertes aufgetreten ist. Anhand dieses Wertes kann erkannt werden, ob eine bestimmte Abschaltverhinderungsbedingung ungewöhnlich oft auftritt. Dieser Zählspeichereintrag kann dadurch vorgenommen werden, dass die Speichereinheit bei jedem neu ankommenden Aktivsignal den Wert des Zählspeichereintrags um 1 erhöht.

Damit keine falschen Speichereinträge vorgenommen werden, kann die Speichereinheit in einer vorteilhaften Ausgestaltung zusätzlich noch ein Fahrzeugtriebwerkssignal auswerten, aus dem hervorgeht, ob das Fahrzeugtriebwerk tatsächlich nicht abgeschaltet wurde. Nur wenn das Fahrzeugtriebwerk tatsächlich nicht abgeschaltet wurde, und ein entsprechendes Speichersignal vorliegt, wird ein dieser Abschaltverhinderungsbedingung zugeordneter Speichereintrag vorgenommen.

Die Speichereinheit kann derart aufgebaut sein, dass zumindest einer der oben genannten Speichereinträge nur für eine Abschaltverhinderungsbedingung, für eine vorgegebene Anzahl von Abschaltverhinderungsbedingungen oder für alle Abschaltverhinderungsbedingungen vorgenommen werden. Die Anzahl der Abschaltverhinderungsbedingungen für die ein Speichereintrag vorgenommen werden soll, kann sich nach der Größe der Speichereinheit richten. Um nicht unnötigen Speicherplatz zu beanspruchen können Speichereinträge zu derartigen Abschaltverhinderungsbedingungen vorgenommen werden, die für den Fahrer schwer nachvollziehbar sind, wenn aufgrund derer die Brennkraftmaschine nicht automatisch abgeschaltet wird. Es können auch mehrere Abschaltverhinderungsbedingungen derart zusammengefasst werden, dass für diese Abschaltverhinderungsbedingungen gleiche Speichersignale gesendet werden, wenn zumindest eine dieser Abschaltverhinderungsbedingungen erfüllt ist. Der dadurch vorgenommen Speichereintrag unterscheidet somit nicht, welche dieser Abschaltverhinderungsbedingungen genau erfüllt war bzw. ist. Dies ist vor allem für derartige Abschaltverhinderungsbedingungen interessant, die für den Fahrer nachvollziehbar sein sollten. Dies bietet den Vorteil, dass die entsprechende Speichereinheit nicht übermäßig groß gewählt werden muss.

Grundsätzlich kann der Speicherbereich jedoch auch so ausgelegt werden, dass alle der oben definierten Bedingungen auf die gesamte Nutzungszeit des Fahrzeuges oder auf Teile der Nutzungszeit des Fahrzeuges in der Steuerungseinheit, und/ oder in einer Zusatzkomponente der Steuerungseinheit abgespeichert werden können.

Vorteilhafterweise lösen folgende Abschaltverhinderungsbedingungen ein Speichersignal aus, wenn sie erfüllt sind bzw. ihren Zustand von "nicht erfüllt" auf "erfüllt" oder von "erfüllt" auf "nicht erfüllt" wechseln:
a) Abschaltverhinderungsbedingung basierend auf dem Zustand einer Klimaanlage,
b) Abschaltverhinderungsbedingung basierend auf dem Zustand eines Power-Management-Systems,
c) Abschaltverhinderungsbedingung basierend auf der Beladung eines Aktivkohlefilters,
d) Abschaltverhinderungsbedingung basierend auf dem Bremsdruck eines Bremssystems oder Bremsunterdrucksystems,
e) Abschaltverhinderungsbedingung basierend auf der Temperatur des Fahrzeugtriebwerks,
f) Abschaltverhinderungsbedingung basierend auf der Temperatur eines Katalysators oder einer anderen Komponente des Triebwerksystems,
g) Abschaltverhinderungsbedingung basierend auf motorspezifischen Zuständen des Fahrzeugtriebwerks,
h) Abschaltverhinderungsbedingung basierend auf den Füllstand eines Kraftstofftanks oder auf Füllstände anderer Komponenten des Triebwerksystems,
i) Abschaltverhinderungsbedingung basierend auf der aktuellen Außentemperatur oder anderen aktuellen Umgebungsbedingungen,
j) Abschaltverhinderungsbedingung basierend auf aktuell aktiver Adaptionsvorgange und/oder aktiver Fahrzeugfunktionen oder anderer aktiver Softwarefunktionalitäten im Netzwerkverbund des Fahrzeuges,
k) Abschaltverhinderungsbedingung basierend auf vorgegebenen Fahrzeugzuständen,
l) Abschaltverhinderungsbedingung basierend auf einer System-Deaktivierungsbedingung.

Die unter a) beschriebene Abschaltverhinderungsbedingung tritt bspw. ein, wenn der aktuelle Zustand der Klimaanlage einen automatischen Abschaltvorgang nicht ermöglicht. Dies könnte der Fall sein, wenn bei abgeschalteter Brennkraftmaschine eine ausreichende Temperierung des Fahrzeuginnenraums nicht mehr gewährleistet wäre. Die unter b) beschriebene Abschaltverhinderungsbedingung tritt bspw. ein, wenn sich das Power-Management, bspw. aufgrund einer entladenen Batterie, in einem Zustand befindet, in dem kein automatischer Abschaltvorgang vorgenommen werden kann. Die unter c) beschriebene Abschaltverhinderungsbedingung tritt bspw. ein, wenn der Beladungszustand eines Aktivkohlefilters einen vorgegebenen Grenzwert überschreitet. Die unter d) beschriebene Abschaltverhinderungsbedingung tritt bspw. ein, wenn der Bremsdruck eines Bremssystems einen vorgegebenen Bremsdruck über- oder unterschreitet. Die unter e) beschriebene Abschaltverhinderungsbedingung tritt bspw. ein, wenn die Temperatur der Brennkraftmaschine oder eines anderen Fahrzeugtriebwerks einen vorgegebenen Temperaturbereich bzw. Grenzwert überschreitet. Die unter f) beschriebene Abschaltverhinderungsbedingung tritt bspw. ein, wenn die Temperatur eines Katalysators einen vorgegebenen Temperaturbereich bzw. Grenzwert überschreitet. Die unter g) beschriebene Abschaltverhinderungsbedingung tritt bspw. ein, wenn sich die Brennkraftmaschine in einem Zustand befindet, in dem ein automatischer Abschaltvorgang nicht möglich bzw. sinnvoll ist. Die unter h) beschriebene Abschaltverhinderungsbedingung tritt bspw. ein, wenn der Füllstand eines Tanksystems einen vorgegebenen Grenzwert unterschreitet. Die unter i) beschriebene Abschaltverhinderungsbedingung tritt bspw. ein, wenn die Außentemperatur einen vorgegebenen Temperaturbereich über- oder unterschreitet. Die unter j) und k) beschriebenen Abschaltverhinderungsbedingungen treten bspw. ein wenn sich ein Dieselpartikelfilter in einem Regenerierungszustand befindet oder wenn z. B. bei einem gewollten Abschaltvorgang ein Geschwindigkeitsregelsystem aktiv ist und das Abschaltsystem deshalb einen Abschaltvorgang nicht erlaubt.

Die unter l) beschriebene Abschaltverhinderungsbedingung tritt bspw. ein, wenn das den automatischen Abschaltvorgang auslösende System aufgrund vorgegebener Bedingungen, sog. Deaktivierungsbedingungen deaktiviert wurde. Diese Deaktivierungsbedingungen können in einer Abschaltverhinderungsbedingung zusammengefasst werden oder es kann jede Deaktivierungsbedingung eine separates der entsprechenden Deaktivierungsbedingung zugeordnetes Speichersignal erzeugen und zu einem von der jeweiligen Deaktivierungsbedingung abhängiger Speichereintrag führen. Analog der Steuerungseinheit zur Steuerung eines automatischen Abschaltvorgangs kann eine Steuerungseinheit zur Steuerung eines automatischen Einschaltvorgangs eines Fahrzeugtriebwerks, insbesondere einer Brennkraftmaschine erfindungsgemäß derart ausgestaltet sein, dass die Steuerungseinheit ein Speichersignal zum Speichern zumindest eines einer Einschaltverhinderungsbedingung zugeordneten Speichereintrags an eine Speichereinheit sendet, wenn vorgegebene Bedingungen erfüllt sind. Dementsprechend können entsprechend den Speichersignalen für die Abschaltverhinderungsbedingungen auch die Speichersignale für die Einschaltverhinderungsbedingungen als Aktivsignale ausgestaltet sein. In der Speichereinheit können dann in Abhängigkeit von diesen Signalen der Status der entsprechenden Einschaltverhinderungsbedingung, der zum Zeitpunkt des letztmaligen Auftretens dieser Einschaltverhinderungsbedingung aktuelle erste Kilometerstand und der zum Zeitpunkt des letztmaligen Beendens des Auftretens dieser Einschaltverhinderungsbedingung aktuelle zweiten Kilometerstand als Speichereintrag gespeichert werden. Wie bereits erwähnt kann anstelle der jeweiligen Speicherung eines Kilometerstandes auch eine relative oder absolute Zeitangabe gespeichert werden. Im Übrigen sind die übrigen Ausgestaltungen der erfindungsgemäßen Steuerungseinheit zur Steuerung eines automatischen Abschaltvorgangs auch auf die erfindungsgemäße Steuerungseinheit zur Steuerung des automatischen Einschaltvorgangs anwendbar. Die beiden Steuerungseinheiten und die beiden Speichereinheiten können dabei als eine Einheit ausgebildet sein.

Diese erfindungsgemäßen Steuerungseinheiten bieten somit den Vorteil, dass die dadurch gefüllte Speichereinheit mittels eines Auslesegerätes in Werkstätten und in der Produktion von Fahrzeugwerken ausgelesen werden kann, und somit nachvollziehbar wird, warum ein gewünschter Abschaltvorgang und/oder Einschaltvorgang nicht ausgeführt wurde.

Die Erfindung wird nun anhand eines Ausführungsbeispiels näher erläutert. Dabei zeigt die
Fig. 1 eine vereinfachte erfindungsgemäße Steuerungseinheit zur Steuerung eines automatischen Abschaltvorgangs eines Fahrzeugtriebwerks,
Fig. 2 einen beispielhaften Signalverlauf eines von der Steuerungseinheit ausgesendeten Aktivsignals einer ersten Abschaltverhinderungsbedingung, und
Fig. 3 ein beispielhaften Aufbau einer Speichereinheit.

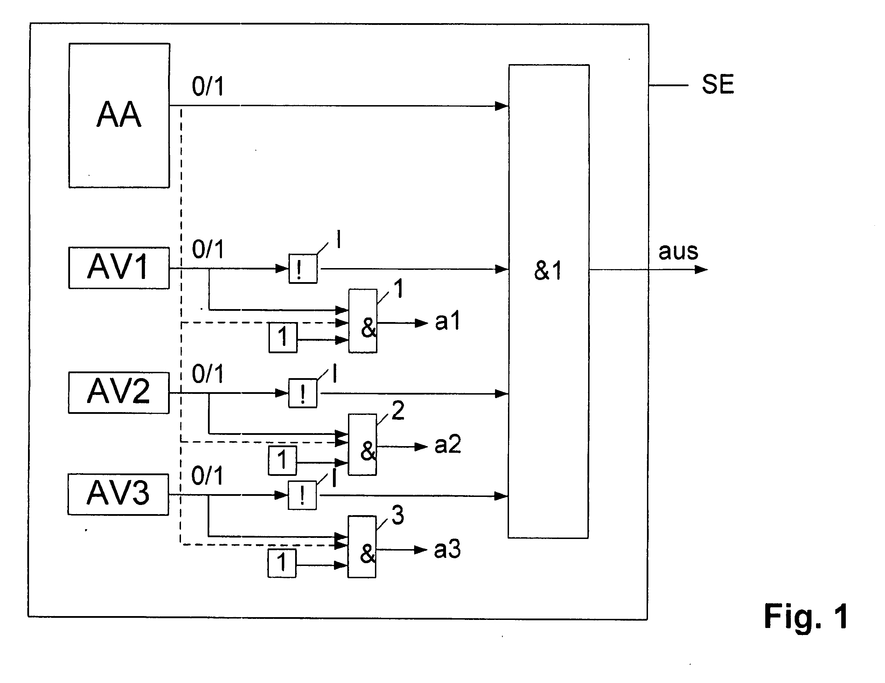

Die Fig. 1 zeigt eine Steuerungseinheit SE zur Steuerung eines automatischen Abschaltvorgangs einer hier nicht dargestellten und als Brennkraftmaschine ausgestalteten Fahrzeugtriebwerks in einem Kraftfahrzeug. In der Steuerungseinheit SE werden vorgegebene Abschaltaufforderungsbedingungen AA und vorgegebene Abschaltverhinderungsbedingungen AV1, AV2 und AV3 auf ihren aktuellen Zustand ausgewertet. Sind alle Abschaltaufforderungsbedingungen AA erfüllt, senden die Abschaltaufforderungsbedingungen AA eine Eins 1 aus, ist nur eine nicht erfüllt, wird eine Null 0 ausgesendet. Dementsprechend sendet jede Abschaltverhinderungsbedingung AV1, AV2 und AV3 eine Null 0 aus, wenn sie nicht erfüllt ist, also einem automatischen Abschaltvorgang nicht entgegensteht, und eine Eins 1, wenn die Abschaltverhinderungsbedingung AV1, AV2 oder AV3 erfüllt ist.

In einer jeweiligen Invertiereinheit I wird der von den Abschaltverhinderungsbedingungen AV1, AV2 und AV3 ausgesendete Wert 0 bzw. 1 invertiert, so dass die &1-Einheit ein Abschaltsignal aus aussendet, wenn alle Eingangssignale den Wert 1 haben und ein Abschalten der Brennkraftmaschine möglich ist. Die Steuerungseinheit SE sendet also ein Abschaltsignal aus zum Vornehmen entsprechender Abschaltmaßnahmen zum automatischen Abschalten des Fahrzeugtriebwerks aus, wenn vorgegebene Abschaltaufforderungsbedingungen AA erfüllt sind - wenn sie also eine Eins aussenden - und wenn keine der vorgegebenen Abschaltverhinderungsbedingung AV1, AV2 und AV3 erfüllt ist- also jeweils eine Null aussendet.

Ist zumindest eine der Abschaltverhinderungsbedingungen AV1, AV2 oder AV3 erfüllt, d. h. es wird von der entsprechenden Abschaltverhinderungsbedingung eine Eins 1 ausgesendet, wird dies in einer der drei &-Einheiten 1, 2 bzw. 3 erkannt. Sing gleichzeitig alle Abschaltaufforderungsbedingungen AA erfüllt, senden die entsprechenden &-Einheit 1, 2 oder 3 daraufhin für die Dauer der erfüllten Abschaltverhinderungsbedingung AV1, AV2 bzw. AV3 ein als Aktivsignal a1, a2 bzw. a3 ausgestaltete Speichersignal an eine hier nicht dargestellte Speichereinheit. Erst, wenn die entsprechende Abschaltverhinderungsbedingung AV1, AV2 bzw. AV3 nicht mehr erfüllt ist, wird das Aktivsignal a1, a2 bzw. a3 (unabhängig vom Zustand der Abschaltaufforderungsbedingungen) zurückgenommen.

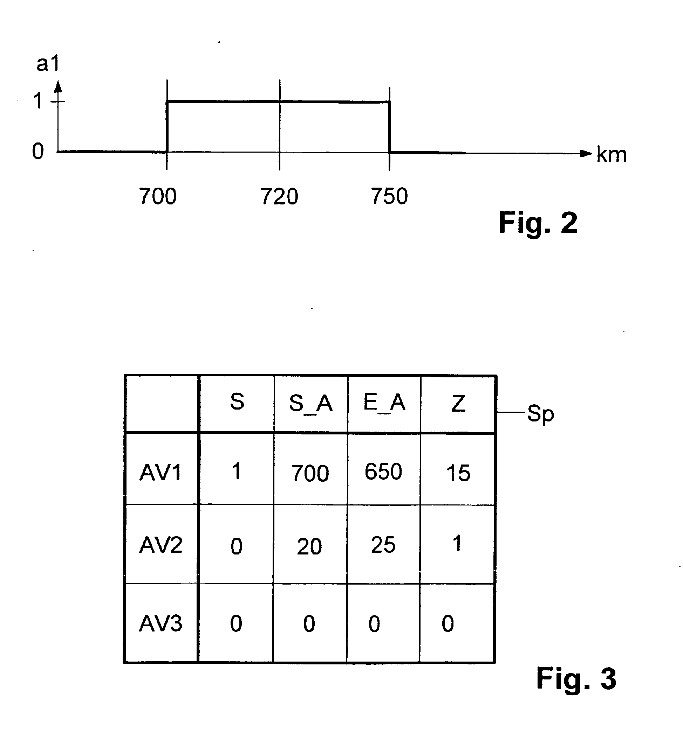

Die Fig. 2 zeigt einen beispielhaften Signalverlauf des zur ersten Abschaltbedingung AV1 gehörige Aktivsignal a1 unter der Voraussetzung, dass alle Abschaltaufforderungsbedingungen AA erfüllt sind, zusätzlich aber auch die erste Abschaltverhinderungsbedingung AV1 zwischen einem ersten Kilometerstand von 700 km und einem zweiten Kilometerstand von 750 km erfüllt ist. Zu dem Zeitpunkt, bei dem das Fahrzeug bereits 700 km gefahren ist, tritt der Umstand ein, dass neben allen Abschaltaufforderungsbedingen AA auch die Abschaltverhinderungsbedingung AV1 erfüllt ist. Daraufhin sendet die Steuerungseinheit SE ab diesem Zeitpunkt ein Aktivsignal a1 an die Speichereinheit aus. Der Beginn ist durch die steigende Flanke des Aktivsignals a1 erkennbar. Zum Zeitpunkt, bei dem das Fahrzeug bereits 750 km zurückgelegt hat, entfällt diese Abschaltverhinderungsbedingung wieder. Zu diesem Zeitpunkt nimmt die Steuerungseinheit das Aktivsignal a1 wieder zurück. Das Ende ist durch die fallende Flanke des Aktivsignals erkennbar.

Alternativ zur Erkennung der Flanken eines Aktivsignals bezogen auf den Kilometerstand oder auf eine relative oder absolute Zeitangabe kann auch der relative Kilometerstand gespeichert werden. Dies bedeutet beispielsweise die Erkennung der "positiven" Flanke geschah 700 Kilometer vor dem aktuellen im Fahrzeug gezählten Kilometerstand (der die Gesamtfahrtleistung des Fahrzeuges über die Instrumentenkombination anzeigt). Des Weiteren erfolgt die Erkennung der "negativen" Flanke zeitlich später als die Erkennung der positiven Flanke, bezogen auf das Beispiel bei 650 Kilometer vor dem aktuellen im Fahrzeug gezählten Kilometerstand.

In der Fig. 3 ist nun ein vereinfachter Aufbau einer Speichereinheit Sp dargestellt, wobei die Einträge in der Speichereinheit Sp durch entsprechende Speichersignale verursacht wurden bzw. werden. Die Fig. 3 zeigt eine Momentaufnahme zu einem Zeitpunkt, bei dem ein Fahrzeug bereits 720 km gefahren ist. Die Speichereinheit erhält das der ersten Abschaltverhinderungsbedingung AV1 zugeordneten und in der Fig. 2 dargestellte Signal a1. Neben diesem Signal a1 erhält die Speichereinheit auch die einer zweiten und dritten Abschaltverhinderungsbedingung zugeordneten Signale a2 und a3. Der Einfachheit halber wird angenommen, dass zu diesem Zeitpunkt außer der ersten Abschaltverhinderungsbedingung AV1 keine weitere Abschaltverhinderungsbedingung AV2 bzw. AV3 erfüllt ist und somit die Steuerungseinheit SE kein entsprechendes Aktivsignal a2 bzw. a3 an die Speichereinheit sendet.

Die Speichereinheit Sp ist derart aufgebaut, dass für jede Abschaltverhinderungsbedingung eine Zeile für Speichereinträge zur Verfügung steht. In jeder Zeile können vier Speichereinträge vorgenommen werden, wobei die erste Spalte S den aktuellen Status der entsprechenden Abschaltverhinderungsbedingung wiedergibt, und der Wert in der zweite Spalte S_A wiedergibt, bei welchem Kilometerstand die entsprechende Abschaltverhinderungsbedingung letztmalig ihren Zustand von "nicht aktiv" auf "aktiv" gewechselt hat.

Der Wert in der dritten Spalte S_E gibt wieder, bei welchem Kilometerstand die entsprechende Abschaltverhinderungsbedingung letztmalig ihren Zustand von "aktiv" auf "nicht aktiv" gewechselt hat. In der vierten Spalte Z wird die Anzahl der Aktivzustände der entsprechenden Abschaltverhinderungsbedingung seit dem letzten Reset dieses Zählers angegeben.

Aus der dargestellten Speichereinheit ist nun erkennbar, dass die erste Abschaltverhinderungsbedingung AV1 derzeit aktiv ist, und zwar seit dem Zeitpunkt, bei dem das Fahrzeug 700 km zurückgelegt hatte (steigende Flanke des Aktivsignals a1). Das letzte Mal hat die erfüllte Abschaltverhinderungsbedingung AV1 ihrer Erfüllt-Zustand bei einem Kilometerstand von 650 km verlassen (fallende Flanke des Aktivsignals a1). Insgesamt ist diese Abschaltverhinderungsbedingung AV1 bereits 15-mal erfüllt gewesen. Im Gegensatz dazu war die zweite Abschaltverhinderungsbedingung AV2 erst einmal erfüllt, ist derzeit nicht erfüllt, und war letztmalig zwischen einem Kilometerstand von 20 km und 25 km erfüllt. Die dritte Abschaltverhinderungsbedingung AV3 war noch nie erfüllt.

## Patentansprüche

1. Steuerungseinheit zur Steuerung eines automatischen Abschaltvorgangs eines Fahrzeugtriebwerks in einem Kraftfahrzeug, wobei die Steuerungseinheit (SE) ein Abschaltsignal zum Vornehmen entsprechender Abschaltmaßnahmen zum automatischen Abschalten des Fahrzeugtriebwerks aussendet, wenn vorgegebene Abschaltaufforderungsbedingungen (AA) erfüllt sind und keine vorgegebene Abschaltverhinderungsbedingung (AV1, AV2, AV3) erfüllt ist, **dadurch gekennzeichnet, dass** die Steuerungseinheit (SE) ein Speichersignal (a1, a2, a3) zum Speichern zumindest eines einer Abschaltverhinderungsbedingung (AV1, AV2, AV3) zugeordneten Speichereintrags (S, S_A. E_A, Z) an eine Speichereinheit (Sp) sendet, wenn vorgegebene Bedingungen erfüllt sind.

2. Steuerungseinheit nach Anspruch 1, **dadurch gekennzeichnet**, für jede Abschaltverhinderungsbedingung (AV1, AV2, AV3) ein dieser Abschaltverhinderungsbedingung (AV1, AV2, AV3) zugeordnetes Speichersignal (a1, a2, a3) ausgelöst wird, und auf jedes derartige Speichersignal (a1, a2, a3) ein der das Speichersignal auslösenden Abschaltverhinderungsbedingung zugeordneter Speichereintrag (S, S_A, E_A, Z) vorgenommen wird.

3. Steuerungseinheit nach Anspruch 1 oder 2, **dadurch gekennzeichnet, dass** die Steuerungseinheit (SE) ein als Aktivsignal (a1, a2, a3) ausgestaltetes Speichersignal an die Speichereinheit (Sp) sendet, wenn zusätzlich zu allen Abschaltaufforderungsbedingungen (AA) auch zumindest eine Abschaltverhinderungsbedingung (AV1, AV2, AV3) erfüllt ist.

4. Steuerungseinheit nach Anspruch 3, **dadurch gekennzeichnet, dass** die Speichereinheit (Sp) auf ein Aktivsignal (a1, a2, a3) zumindest einen der folgenden Speichereinträge vornimmt:
a) einen den Zustand der Abschaltverhinderungsbedingung wiedergebenden ersten Speichereintrag (S),
b) einen zum Zeitpunkt des Aussendens des Aktivsignals aktuellen ersten Kilometerstand des Kraftfahrzeugs (S_A),
c) einen zum Zeitpunkt des Beendens des Aktivsignals aktuellen zweiten Kilometerstand des Kraftfahrzeugs (E_A).

5. Steuerungseinheit nach Anspruch 3 oder 4, **dadurch gekennzeichnet, dass** der auf das Aktivsignal (a1, a2, a3) vorgenommene Speichereintrag (S, S_A, E_A, Z) überschreibbar ist.

6. Steuerungseinheit nach einem der Ansprüche 2-5, **dadurch gekennzeichnet, dass** die Speichereinheit (Sp) auf ein Aktivsignal (a1, a2, a3) einen der entsprechenden Abschaltverhinderungsbedingung (AV1, AV2, AV3) zugeordneten vorhandenen Zähler (Z) um 1 erhöht.

7. Steuerungseinheit nach einem der vorangegangenen Ansprüche, **dadurch gekennzeichnet, dass** die Speichereinheit (Sp) auf ein Aktivsignal (a1, a2, a3) nur dann einen Speichereintrag (S, S_A, E_A, Z) vornimmt, wenn das Fahrzeugtriebwerk tatsächlich nicht automatisch abgeschaltet wird.

8. Steuerungseinheit nach einem der vorangegangenen Ansprüche, **dadurch gekennzeichnet, dass** zumindest eine der folgenden Abschaltverhinderungsbedingungen (AV1, AV2, AV3) ein Speichersignal (S, S_A, E_A, Z) auslöst, wenn diese Abschaltverhinderungsbedingung (AV1, AV2, AV3) erfüllt ist:
a) Abschaltverhinderungsbedingung basierend auf dem Zustand einer Klimaanlage,
b) Abschaltverhinderungsbedingung basierend auf dem Zustand eines Power-Management-Systems,
c) Abschaltverhinderungsbedingung basierend auf der Beladung eines Aktivkohlefilters,
d) Abschaltverhinderungsbedingung basierend auf dem Bremsdruck eines Bremssystems oder Bremsunterdrucksystems,
e) Abschaltverhinderungsbedingung basierend auf der Temperatur des Fahrzeugtriebwerks,
f) Abschaltverhinderungsbedingung basierend auf der Temperatur eines Katalysators oder einer anderen Komponente des Triebwerksystems,
g) Abschaltverhinderungsbedingung basierend auf motorspezifischen Zuständen des Fahrzeugtriebwerks,
h) Abschaltverhinderungsbedingung basierend auf den Füllstand eines Kraftstofftanks oder auf Füllstände anderer Komponenten des Triebwerksystems,
i) Abschaltverhinderungsbedingung basierend auf der aktuellen Außentemperatur oder anderen aktuellen Umgebungsbedingungen,
j) Abschaltverhinderüngsbedingung basierend auf aktuell aktiver Adaptionsvorgange und/oder aktiver Fahrzeugfunktionen oder anderer aktiver Softwarefunktionalitäten im Netzwerkverbund des Fahrzeuges,
k) Abschaltverhinderungsbedingung basierend auf vorgegebenen Fahrzeugzuständen,
l) Abschaltverhinderungsbedingung basierend auf einer System-Deaktivierungsbedingung.

9. Steuerungseinheit zur Steuerung eines automatischen Einschaltvorgangs eines Fahrzeugtriebwerks in einem Kraftfahrzeug, wobei die Steuerungseinheit (SE) ein Einschaltsignal zum Vornehmen entsprechender Einschaltmaßnahmen zum automatischen Einschalten des Fahrzeugtriebwerks aussendet, wenn vorgegebene Einschaltaufforderungsbedingungen erfüllt sind und keine vorgegebene Einschaltverhinderungsbedingung erfüllt ist, **dadurch gekennzeichnet, dass** die Steuerungseinheit (SE) ein Speichersignal zum Speichern zumindest eines einer Einschaltverhinderungsbedingung zugeordneten Speichereintrags an eine Speichereinheit (Sp) sendet, wenn vorgegebene Bedingungen erfüllt sind.

## Claims

1. A control unit for controlling an automatic switching-off process of a vehicle engine in a motor vehicle, wherein the control unit (SE) emits a switch-off signal to carry out corresponding switch-off measures for automatically switching off the vehicle engine when predetermined switch-off request conditions (AA) are met and no predetermined switch-off prevention condition (AV1, AV2, AV3) is met, **characterised in that** the control unit (SE) sends a memory signal (a1, a2, a3) to a memory unit (Sp) to store at least one memory entry (S, S_A, E_A, Z) associated with a switch-off prevention condition (AV1, AV2, AV3), if predetermined conditions are met.

2. A control unit according to claim 1, **characterised in that** for each switch-off prevention condition (AV1, AV2, AV3), a memory signal (a1, a2, a3) associated with this switch-off prevention condition (AV1, AV2, AV3) is triggered and in response to each memory signal (a1, a2, a3) of this type, a memory entry (S, S_A, E_A, Z) associated with the switch-off prevention condition triggering the memory signal is carried out.

3. A control unit according to claim 1 or 2, **characterised in that** the control unit (SE) sends a memory signal configured as an active signal (a1, a2, a3) to the memory unit (Sp) if, in addition to all the switch-off request conditions (AA), at least one switch-off prevention condition (AV1, AV2, AV3) is also met.

4. A control unit according to claim 3, **characterised in that** the memory unit (Sp) in response to an active signal (a1, a2, a3) carries out at least one of the following memory entries:
a) a first memory entry (S) reflecting the state of the switch-off prevention condition,
b) a current first kilometre reading of the motor vehicle (S_A) at the time of emission of the active signal,
c) a current second kilometre reading of the motor vehicle (E_A) at the time of ending the active signal.

5. A control unit according to claim 3 or 4, **characterised in that** the memory entry (S, S_A, E_A, Z) carried out in response to the active signal (a1, a2, a3) can be overwritten.

6. A control unit according to any one of claims 2 to 5, **characterised in that** the memory unit (Sp), in response to an active signal (a1, a2, a3) advances a counter (Z) associated with the corresponding switch-off prevention condition (AV1, AV2, AV3) by 1.

7. A control unit according to any one of the preceding claims, **characterised in that** the memory unit (Sp), in response to an active signal (a1, a2, a3) only carries out a memory entry (S, S_A, E_A, Z) when the vehicle engine is not actually automatically switched off.

8. A control unit according to any one of the preceding claims, **characterised in that** at least one of the following switch-off prevention conditions (AV1, AV2, AV3) triggers a memory signal (S, S_A, E_A, Z) when this switch-off prevention condition (AV1, AV2, AV3) is met:
a) switch-off prevention condition based on the state of an air conditioning system,
b) switch-off prevention condition based on the state of a power management system,
c) switch-off prevention condition based on the loading of an activated carbon filter,
d) switch-off prevention condition based on the brake pressure of a brake system or vacuum brake system,
e) switch-off prevention condition based on the temperature of the vehicle engine,
f) switch-off prevention condition based on the temperature of a catalyst or another component of the engine system,
g) switch-off prevention condition based on motor-specific states of the vehicle engine,
h) switch-off prevention condition based on the filling level of a fuel tank or on filling levels of other components of the engine system,
i) switch-off prevention condition based on the current outside temperature or other current environmental conditions,
j) switch-off prevention condition based on currently active adaptation processes and/or active vehicle functions or other active software functionalities in the interconnected network group of the vehicle,
k) switch-off prevention condition based on predetermined vehicle states,
l) switch-off prevention condition based on a system deactivation condition.

9. A control unit for controlling an automatic switch-on process of a vehicle engine in a motor vehicle, wherein the control unit (SE) emits a switch-on signal for carrying out corresponding switch-on measures for automatically switching on the vehicle engine when predetermined switch-on request conditions are met and no predetermined switch-on prevention condition is met, **characterised in that** the control unit (SE) sends a memory signal to store at least one memory entry associated with a switch-on prevention condition to a memory unit (Sp), when predetermined conditions are met.

## Revendications

1. Unité de commande d'une opération de coupure automatique d'une transmission de véhicule automobile,
l'unité de commande (SE) émettant un signal de coupure pour lancer une mesure de coupure correspondante pour couper automatiquement le moteur du véhicule si des conditions de requête de coupure, prédéfinies (AA) sont remplies et si aucune condition d'empêchement de coupure, prédéfinie n'est remplie (AV1, AV2, AV3),
**caractérisée en ce que**
l'unité de commande (SE) envoi un signal de mémoire (a1, a2, a3) pour réaliser au moins un enregistrement de mémoire (S, S_A, E_A, Z) associé à une condition d'empêchement de coupure (AV1, AV2, AV3), à une unité de mémoire (Sp) si des conditions prédéfinies sont remplies.

2. Unité de commande selon la revendication 1,
**caractérisée en ce que**
pour chaque condition d'empêchement de coupure (AV1, AV2, AV3), un signal de mémoire (a1, a2, a3) associé à cette condition d'empêchement de coupure (AV1, AV2, AV3) est déclenché, et en réponse à chacun de ces signaux de mémoire (a1, a2, a3), on effectue un enregistrement de mémoire (S, S_A, E_A, Z) associé à la condition d'empêchement de coupure déclenchant, le signal de mémoire.

3. Unité de commande selon la revendication 1 ou 2,
**caractérisée en ce que**
l'unité de commande (SE) envoie à l'unité de mémoire (Sp) un signal de mémoire sous la forme d'un signal d'activation (a1, a2, a3), si en plus de toutes les conditions de requête de coupure (AA), au moins une condition d'empêchement de coupure (AV 1, AV2, AV3) est remplie.

4. Unité de commande selon la revendication 3,
**caractérisée en ce que**
l'unité de mémoire (Sp) exécute au moins l'un des enregistrements de mémoire suivant en réponse à un signal d'activation (a1, a2, a3) :
a) un premier enregistrement de mémoire (S) représentant l'état de la condition d'empêchement de coupure,
b) un premier état kilométrique du véhicule automobile (S_A) à l'instant de l'émission du signal d'activation actuel,
c) un second état kilométrique du véhicule automobile (E_A) à l'instant de la fin du signal d'activation.

5. Unité de commande selon la revendication 3 ou 3,
**caractérisée en ce que**
l'enregistrement de mémoire (S, 8_A, E_A, Z) effectué en réponse au signal d'activation (a1, a2, a3), peut être surscrit.

6. Unité de commande selon l'une des revendications 2 à 5, **caractérisée en ce que**
en réponse à un signal d'activation (a1, a2, a3), l'unité de mémoire (Sp) augmente d'une unité le compteur (Z) associé à la condition d'empêchement de coupure correspondante (AV1, AV2, AV3).

7. Unité de commande selon l'une des revendications précédentes, **caractérisée en ce que**
l'unité de mémoire (Sp) exécute seulement un enregistrement de mémoire (S, 8_A, E_A, Z) en réponse à un signal d'activation (a1, a2, a3) si le moteur du véhicule n'est effectivement pas coupé automatiquement.

8. Unité de commande selon l'une des revendications précédentes, **caractérisée en ce qu'**
au moins l'une des conditions d'empêchement de coupure (AV1, AV2, AV3), déclenche un signal de mémoire (S, S_A, E_A, Z) si cette condition d'empêchement de coupure (AV1, AV2, AV3) est remplie :
a) condition d'empêchement de coupure fondée sur l'état d'une installation de climatisation,
b) condition d'empêchement de coupure fondée sur l'état d'un système de gestion de puissance,
c) condition d'empêchement de coupure fondée sur l'encombrement d'un filtre à charbon actif,
d) condition d'empêchement de coupure fondée sur la pression de frein d'un système de freins ou d'un système de freins à dépression,
e) condition d'empêchement de coupure fondée sur la température du moteur du véhicule,
f) condition d'empêchement de coupure fondée la température d'un catalyseur ou d'un autre composant du moteur,
g) condition d'empêchement de coupure fondée sur les états spécifiques du moteur du véhicule,
h) condition d'empêchement de coupure fondée sur l'état de remplissage d'un réservoir de carburant ou les états de remplissage d'autres composants du système d'entraînement,
i) condition d'empêchement de coupure fondée sur la température extérieure actuelle ou d'autres conditions actuelles d'environnement,
j) condition d'empêchement de coupure fondée sur une opération d'adaptation activée, actuelle et/ou des fonctions activées du véhicule ou autres fonctions activées de programme dans le réseau du véhicule,
k) condition d'empêchement de coupure fondée sur des états prédéfinis du véhicule,
l) condition d'empêchement de coupure fondée sur une condition de neutralisation du système.

9. Unité de commande d'une opération de mise en oeuvre automatique d'un moteur de véhicule automobile selon lequel,
l'unité de commande (SE) émet un signal de branchement pour lancer des mesures de mise en oeuvre correspondantes pour activer automatiquement le moteur du véhicule si des conditions de requête de commutation, prédéfinies sont remplies et si aucune condition d'empêchement de commutation, prédéfinie n'est remplie,
**caractérisée en ce que**
l'unité de commande (SE) émet un signal de mémoire pour enregistrer un enregistrement de mémoire associé à une condition de commutation dans une unité de mémoire (Sp) si les conditions prédéfinies sont remplies.
